Europäisches Patentamt

**European Patent Office**

**Office européen des brevets**

(19)

(11) Veröffentlichungsnummer: **0 056 132**
A1

(12) # EUROPÄISCHE PATENTANMELDUNG

(21) Anmeldenummer: **81110543.6**

(22) Anmeldetag: **17.12.81**

(51) Int. Cl.³: **B 28 D 1/18**

(30) Priorität: **13.01.81 DE 3100733**

(43) Veröffentlichungstag der Anmeldung: **21.07.82**
**Patentblatt 82/29**

(84) Benannte Vertragsstaaten: **AT BE CH DE FR GB IT LI LU NL SE**

(71) Anmelder: **Szathmary, Janos, Seitenstrasse 5, D-7141 Oberriexingen (DE)**

(72) Erfinder: **Szathmary, Janos, Seitenstrasse 5, D-7141 Oberriexingen (DE)**

(74) Vertreter: **Maier, Eugen, Dr.-Ing. et al, Patentanwälte Dr.-Ing. Eugen Maier Dr.-Ing. Eckhard Wolf Pischekstrasse 19, D-7000 Stuttgart 1 (DE)**

(54) **Vorrichtung zur Herstellung von Hinterschneidungen in einer zylindrischen Bohrung einer Betonwand.**

(57) Für die Befestigung von Gegenständen an fertigen Beton- oder Steinwänden mittels Wandankern wird zunächst mindestens eine Bohrung in die Wand eingebracht. Danach werden innerhalb der Bohrung mehrere zum Bohrungsinneren hin offene Hinterschneidungen eingefräst, in die ein aufspreizbarer Teil des Ankers und/oder ein Teil einer aushärtenden Füllmasse unter Bildung einer formschlüssigen Verankerung eindrückbar ist. Zur Herstellung der Hinterschneidungen wird eine Fräsvorrichtung verwendet, die eine um eine zur Bohrung konzentrische Achse verdrehbare Führungsbüchse (13) und mehrere in axialem Abstand voneinander angeordnete, gegenüber der Bohrungsachse radial verschiebbare und mittels eines Motors mit hoher Drehzahl um eine zur Bohrungsachse parallele Achse drehbare Fräsorgane oder Frässcheiben (22) aus einer Diamant-Sintermasse enthält.

EP 0 056 132 A1

## DR.-ING. EUGEN MAIER    DR.-ING. ECKHARD WOLF

PATENTANWALTE

ZUGELASSENE VERTRETER VOR DEM EUROPAISCHEN PATENTAMT

TELEFON: (0711) 24 27 61/2
TELEGRAMME: MENTOR

7 STUTTGART 1, PISCHEKSTR. 19

DRESDNER BANK AG
STUTTGART NR. 1 920 534
POSTSCHECK STGT. 25200-709

Janos Szathmary

Seitenstr. 5

7141  Oberriexingen

---

Vorrichtung zur Herstellung von
Hinterschneidungen in einer zylindrischen
Bohrung einer Betonwand

---

Die Erfindung betrifft eine Vorrichtung zur Herstellung
von Hinterschneidungen in einer zylindrischen Bohrung
einer Betonwand mit einer um eine zur Bohrung konzentrische
Achse verdrehbaren Führungsbüchse sowie gegenüber der
Führungsbüchse radial verschiebbaren Fräsorganen.

Die genannten Bohrungen in der Betonwand sind zur Aufnahme
von Wandankern bestimmt, die dort durch Aufspreizen und/oder
durch Ausfüllen der Zwischenräume mit einer aushärtenden
Füllmasse festgelegt werden sollen. Mit den Hinterschneidungen soll eine formschlüssige Verbindung mit den aufgespreizten Ankerteilen und/oder der ausgehärteten Füllmasse
erzeugt werden, die ein Herausziehen des Ankers praktisch
unmöglich machen soll. Vor allem beim Ausfüllen der
Zwischenräume mit einer aushärtenden Füllmasse ist es
aus Festigkeitsgründen zweckmäßig, in der Bohrung mehrere
Hinterschneidungen in axialem Abstand voneinander vorzusehen.

- 2 -

Es sind Vorrichtungen der eingangs angegebenen Art bekannt, die Schneid- und Fräsorgane aus Hartmetall aufweisen, mit denen in einem Zuge jeweils nur eine Hinterschneidung eingebracht werden kann und wobei der Schneid- oder Fräsvorgang mehrfach zur Nachstellung der Schneid- oder Fräsorgane unterbrochen werden muß. Abgesehen davon, daß damit bereits das Einbringen einzelner Hinterschneidungen in die Bohrung einer Betonwand recht zeitaufwendig ist, wird zum Herstellen mehrerer Hinterschneidungen nach jedem Arbeitsgang eine Neujustierung der Vorrichtung auf eine andere Tiefe notwendig, die einen zusätzlichen Zeitaufwand erfordert. Dieser Nachteil wirkt sich besonders bei großen Bauwerken, wie beispielsweise bei Kernkraftwerken aus, in denen oft Tausende von Bohrungen mit derartigen Hinterschneidungen versehen werden müssen.

Der Erfindung liegt daher die Aufgabe zugrunde, eine Vorrichtung der eingangs angegebenen Art zu schaffen, mit der mit möglichst geringem Zeitaufwand in einem Zuge und ohne wesentliche Unterbrechungen durch Nachstellung und Neujustierung eine Mehrzahl an Hinterschneidungen in eine Bohrung einer Betonwand eingebracht werden können.

Zur Lösung dieser Aufgabe wird gemäß der Erfindung vorgeschlagen, daß an der Führungsbüchse selbst oder an einer über die Führungsbüchse axial überstehenden Fräswelle mindestens zwei aus einer Diamant-Sintermasse bestehende Fräsorgane oder Frässcheiben in axialem Abstand voneinander radial überstehend angeordnet und mittels eines Motors mit hoher Drehzahl um eine zur Bohrungsachse parallele Achse drehbar sind.

Gemäß einer bevorzugten konstruktiven Ausgestaltung der Erfindung ist in der Führungsbüchse eine Lagerbüchse und in der Lagerbüchse eine mit dem Motor antreibbare Fräswelle angeordnet, die an ihrem freien, in die Wandbohrung einführbaren Ende die in axialem Abstand voneinander angeordneten Frässcheiben trägt. Die Führungsbüchse ist dabei an einem Drehlager einer im Bereich der Bohrungsmündung an der Oberfläche der Betonwand festhaltbaren oder befestigbaren Grundplatte drehbar gelagert, während die Lagerbüchse in einer Langlochführung in der Führungsbüchse quer zur Drehachse verschiebbar und die Fräswelle konzentrisch in der Lagerbüchse gelagert ist.

Diese erfindungsgemäße Fräsvorrichtung ist relativ einfach von einem Mann bedienbar, der für die gleichzeitige Einbringung mehrerer Hinterschneidungen je nach Größe der Bohrung und Festigkeit des Wandmaterials nur etwa 1 bis 5 Minuten benötigt. Da die frei über die Führungsbüchse überstehende Fräswelle innerhalb der Bohrung als solche nicht geführt ist, können damit allerdings nur relativ kurze Bohrungen mit Hinterschneidungen versehen werden.

Um auch in tiefe Bohrungen mehrere Hinterschneidungen in axialem Abstand voneinander rationell einbringen zu können, wird gemäß einer weiteren bevorzugten Ausgestaltung der Erfindung vorgeschlagen, daß die Führungsbüchse selbst in die Bohrung einführbar und mit ihrer zylindrischen Mantelfläche in der Bohrung geführt ist und daß sie einseitig mit einer Hohlwelle starr verbunden ist, die an ihrem der Führungsbüchse gegenüberliegenden Ende in einem Lagerblock gelagert und durch den Motor wahlweise in einer der beiden Drehrichtungen antreibbar ist. Die Fräskörper sind dabei an mindestens zwei innerhalb der Führungsbüchse radial geführten Tragkörpern radial überstehend angeordnet und greifen durch Mantelöffnungen der Führungsbüchse nach außen hindurch. Die Tragkörper sind an ihren einander zugewandten Seiten mit Axialrillen versehen, die sich zu einer gemeinsamen axialsymmetrischen Öffnung ergänzen, die von einer in der Führungsbüchse axialsymmetrisch gelagerten Gewindestange durchsetzt ist, mit deren Gewinde

- 4 -

zwei in der Führungsbüchse axial geführte und mit dieser
drehfest verbundene, mit ihrer einander zugewandten Spitze
in die gemeinsame Öffnung an den einander gegenüberliegenden
Stirnseiten der Tragkörper eingreifende Kegel- oder Keilkörper mit gegensinnig verlaufenden Innengewinden im
Eingriff stehen. Die Gewindestange ist durch die Hohlwelle
hindurchgeführt und an ihrem über das freie Ende der Hohlwelle überstehenden Teil unter Erzeugung einer Relativdrehung gegenüber der Führungsbüchse abbremsbar. Damit
können die Tragkörper und damit auch die Fräskörper unter
Umsetzen der sich bei der Relativdrehung ergebenden Axialverschiebung der Kegel- oder Keilkörper je nach Drehrichtung
entgegen der Kraft einer Feder radial nach außen oder mit der
Federkraft nach innen verschoben werden. Da die Führungsbüchse bei entsprechender Anpassung an den Bohrungsdurchmesser innerhalb der Bohrung geführt und gelagert ist, ist
es möglich, die Hinterschneidungen auch sehr tief innerhalb
der Bohrung einzubringen.

In der Zeichnung sind zwei bevorzugte Ausführungsbeispiele
der Erfindung in schematischer Weise dargestellt. Es zeigen

Fig. 1   ein erstes Ausführungsbeispiel einer Fräsvorrichtung
in senkrecht geschnittener Darstellung;

Fig. 2   eine Draufsicht auf die Fräsvorrichtung nach Fig. 1
mit abgenommenem Motor;

Fig. 3   eine Seitenansicht eines zweiten Ausführungsbeispiels
einer Fräsvorrichtung;

Fig. 4   eine Ansicht der die Fräskörper enthaltenden
Führungsbüchse der Fräsvorrichtung nach Fig. 3 in
vergrößerter Darstellung;

Fig. 5   einen Schnitt entlang der Schnittlinie 5 - 5 der
Fig. 4.

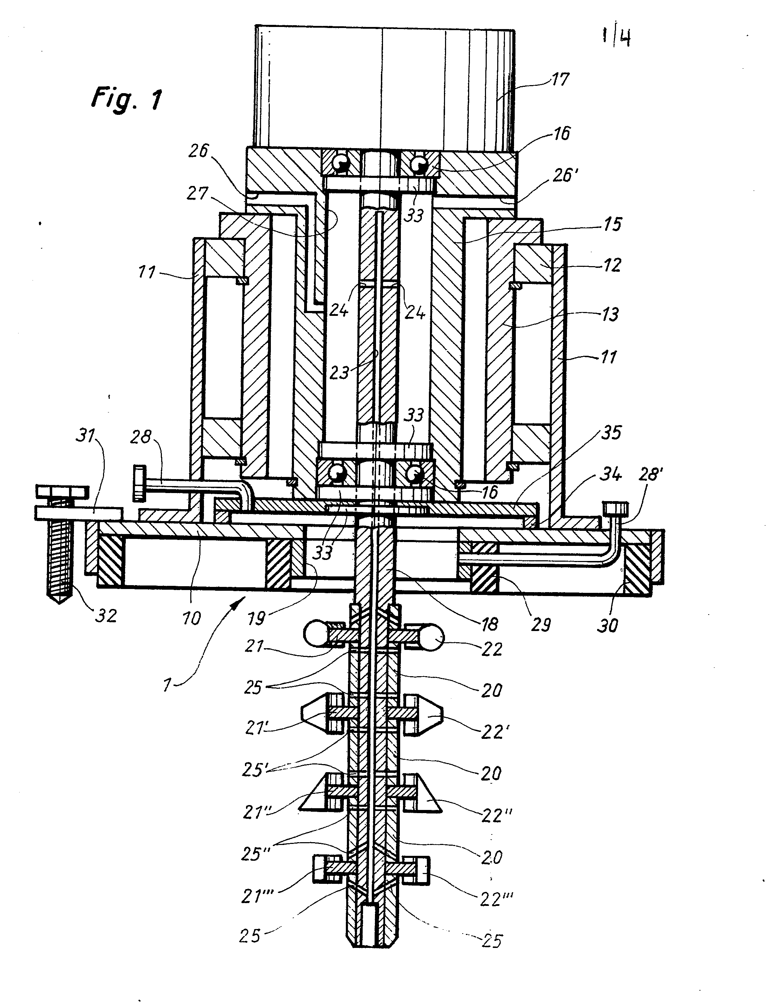

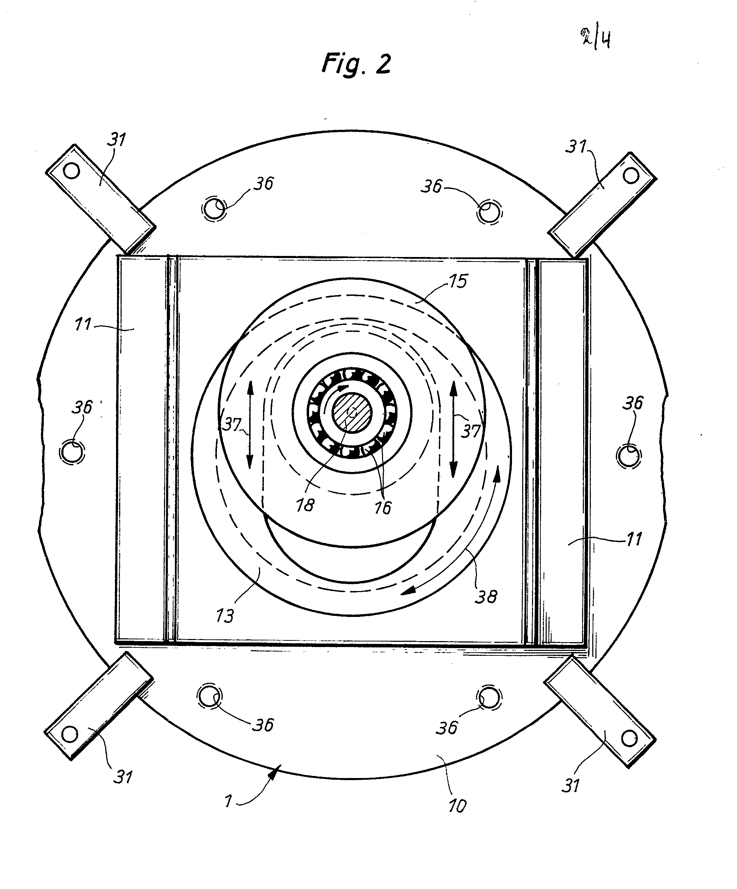

Die in den Figuren 1 und 2 gezeigte Fräsvorrichtung 1 besteht im wesentlichen aus einer mit ihrer Stirnfläche an der Oberfläche einer Beton- oder Steinwand im Bereich einer Bohrung festlegbaren Grundplatte 10, einem mittels Montagewinkeln 11 starr mit der Grundplatte 10 verbundenen Drehlager 12, einer in dem Drehlager um 360° verdrehbar angeordneten Führungsbüchse 13, einer in einer Langlochführung 14 der Führungsbüchse 13 querverschiebbaren Lagerbüchse 15 und einer mittels Wälzlagern 16 an der Lagerbüchse 15 gelagerten, durch einen an der Lagerbüchse 15 befestigten Motor 17 mit relativ hoher Drehzahl antreibbaren Fräswelle 18. Die Fräswelle 18 greift durch eine Durchtrittsöffnung 19 in der Grundplatte 10 hindurch und trägt an ihrem freien Ende mehrere durch Distanzstücke 20 voneinander getrennte Frässcheiben 21,21',21",21''' mit Umfangssegmenten 22,22',22",22''' aus einer Diamant-Sintermasse, deren Querschnitt geometrisch der jeweiligen Anwendung entsprechend verschieden gestaltet sein kann. Die in Fig. 1 gezeigten Querschnittsformen der Umfangssegmente dienen lediglich der Veranschaulichung und sind nicht für einen konkreten Anwendungsfall bestimmt.

Die Fräswelle 18 enthält eine Längsbohrung 23 sowie eine Anzahl Querbohrungen 24,25 für die Zufuhr von Wasser oder Luft in den Bereich der Frässcheiben. Das Wasser oder die Luft wird über eine Wanddurchdringung 26 bzw. 26' in das Innere 27 der Lagerbüchse 15 geleitet und gelangt von dort über die Querbohrungen 24 in die Längsbohrung 23 der Fräswelle und tritt an den Querbohrungen 25 im Bereich der Frässcheiben 21,21',21",21''' wieder aus der Fräswelle aus. Um das austretende Wasser oder die Luft aus einer Bohrung über eine Saugleitung 28 bzw. 28' absaugen zu können, sind an der Grundplatte zwei Dichtungsringe 29,30 aus elastischem Material vorgesehen, die im Bereich um die Bohrungsöffnung dichtend gegen die Oberfläche der Betonwand angedrückt werden können. Die Wellendichtungen 33 und der zusätzliche Dichtungsring 34 an der Zwischenplatte 35 dichten die mit Wasser oder Luft beaufschlagten
Räume jeweils gegen unzulässigen Wasser- oder Luftaustritt
ab.

Die beschriebene Fräsvorrichtung 1 kann wie folgt zur
Herstellung von radialen Hinterschneidungen in einer vorgefertigten Bohrung einer Betonwand verwendet werden:
Der nach außen über die Grundplatte 10 überstehende, die
Frässcheiben 21,21',21"21''' tragende Teil der Fräswelle 18
wird in die zu bearbeitende Bohrung eingeführt, bis die
Grundplatte um die Bohrungsöffnung herum gegen die Wandoberfläche anliegt. Sodann wird die Grundplatte 10 mit
Hilfe von nicht gezeigten Befestigungsschrauben durch
die Löcher 36 hindurch unter Andrücken der Dichtungsringe
29,30 an der Bohrungswand befestigt. Etwaige Unebenheiten
in der Wandoberfläche werden mit Hilfe der in den Gewindelaschen 31 der Grundplatte 20 geführten Stellschrauben 32
ausgeglichen. Sodann werden die Wasser- oder Luftzufuhr-
und - absaugleitungen an die betreffenden Anschlüsse der
Vorrichtung angeschlossen. Das Wasser oder die Luft hat
die Aufgabe, die sich während des Fräsvorgangs aufheizenden
Frässcheiben 21,21',21",21''' zu kühlen und den beim Fräsen
anfallenden Staub aus der Bohrung zu entfernen.

Zu Beginn des Fräsvorgangs wird die Lagerbüchse 15 in
Richtung der Pfeile 37 verschoben, bis die rotierenden
Frässcheiben gegen die Bregrenzungswand der Bohrung andrücken. Beim weiteren Verschieben treten die Frässcheiben
in das Wandmaterial ein. Das Verschieben in Richtung der
Pfeile 37 kann mit Hilfe einer nicht gezeigten, in einem
mit der Führungsbüchse 13 verbundenen Gewinde geführten
und an seinem stirnseitigen Ende mit der Lagerbüchse 15
drehbar verbundenen Spindel von Hand erfolgen. Sobald
die Frässcheiben ein Stück weit in das Material eingedrungen
sind, wird die Führungsbüchse 13 unter Mitnahme der Lagerbüchse und der Fräswelle 18 in Richtung des Pfeils 38 um eine zur Fräswellenachse exzentrische, zweckmäßig mit der Bohrungsachse zusammenfallende Achse um 360° gedreht und dabei jeweils eine Umfangsnut mit einer der betreffenden Frässcheibe entsprechenden Nutenform gebildet. Das Verdrehen der Führungsbüchse 13 im Drehlager 12 kann z.B. mit Hilfe nicht dargestellter, an der Oberfläche der Führungsbüchse 13 radial überstehender Haltestäbe von Hand erfolgen. Die beschriebenen Verschiebe- und Drehvorgänge können mehrfach wiederholt werden, bis die gewünschte Tiefe der Umfangsnuten erreicht ist.

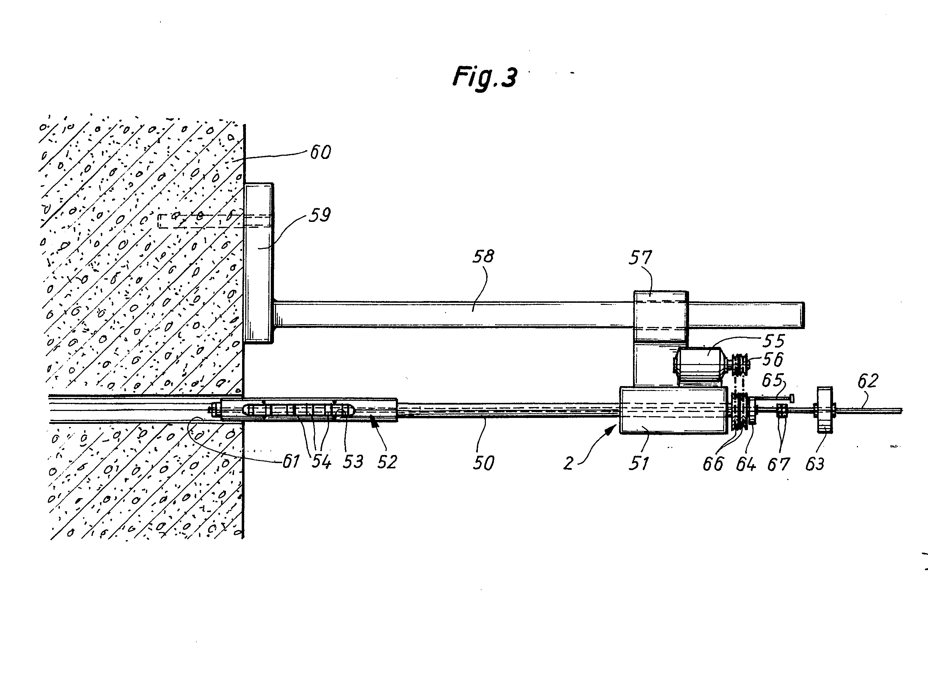

Die in den Figuren 3 bis 5 gezeigte Fräsvorrichtung 2 weist eine über eine Hohlwelle 50 an einem Lagerblock 51 gelagerte Führungsbüchse 52 auf, deren zylindrischer Mantel zwei auf einander gegenüberliegenden Seiten angeordnete Langlochöffnungen 53 für den Durchtritt der einen axialen Abstand voneinander aufweisenden Fräskörper 54 aufweist. Die Führungsbüchse 52 wird über die Hohlwelle 50 mit Hilfe eines seitlich neben dem Lagerblock 51 angeordneten Motors 55, beispielsweise durch einen Riementrieb 56 oder durch ein Zahnrad- oder Kettengetriebe wahlweise in der einen oder anderen Drehrichtung mit relativ hoher Umdrehungszahl angetrieben. Der Lagerblock 50 und der Motor 55 können an einer gemeinsamen Montageplatte eines Führungsschlittens 57 befestigt werden, der auf der Führungsschiene 58 eines Bohrständers verschiebbar und feststellbar angeordnet ist. Der Bohrständer ist mit seiner Grundplatte 59 in der Nähe der mit der Fräsvorrichtung zu bearbeitenden Bohrung 61 an derBetonwand 60 befestigbar.

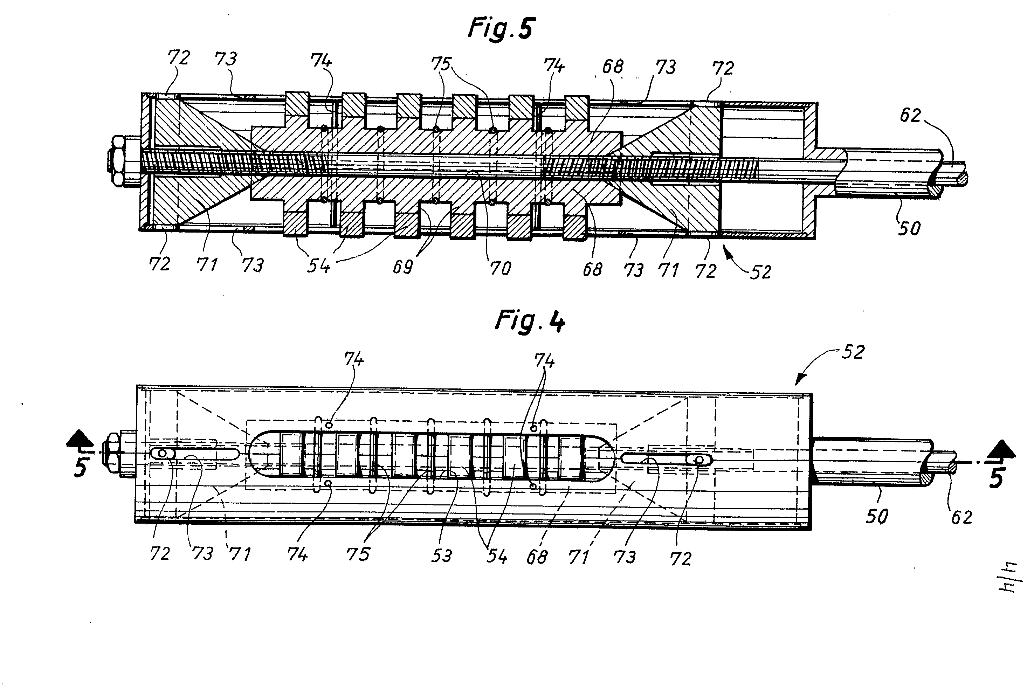

Für die radiale Verschiebung der Fräskörper 54 gegenüber der Führungsbüchse 52 ist eine relativ zur Führungsbüchse drehbare Gewindestange 62 vorgesehen, die durch die Hohlwelle 50 axial hindurchgreift und über deren Ende übersteht. Bei drehender Hohlwelle 50 und Führungsbüchse 52 wird die Gewindestange 62 aufgrund der Reibung innerhalb des Systems normalerweise mit gleicher Umdrehungszahl mitgenommen. Sie kann jedoch an einer am überstehenden Teil der Gewindestange 62 befestigten Bremsscheibe 63 von Hand oder mit einem Bremsriemen abgebremst werden, so daß sich zwischen der drehenden Führungsbüchse 52 und der Gewindestange 62 eine Relativdrehung ergibt. Diese Relativdrehung wird dazu benutzt, die durch die Langlochöffnungen 53 der Führungsbüchse 52 hindurchgreifenden Fräskörper 54 je nach Drehrichtung radial gegenüber der Führungsbüchse 52 nach außen oder nach innen zu verschieben. Damit ist es beim Fräsvorgang möglich, die Fräskörper 54 bei laufendem Motor 55 durch einfaches Festhalten der Bremsscheibe 63 allmählich nach außen zu verschieben, bis die gewünschte Tiefe der Hinterschneidungen erreicht ist. Auch das anschließende Zurückziehen der Fräskörper aus den Hinterschneidungen kann durch Festhalten der Bremsscheibe 63 bei entgegengesetzter Drehrichtung der Führungsbüchse erfolgen, wie nachstehend anhand der Figuren 4 und 5 noch näher erläutert wird.

Die jeweilige radiale Lage der Fräskörper 54 kann an der Position einer Indikatorscheibe 64 abgelesen werden, die mit einem Innengewinde mit dem überstehenden Teil der Gewindestange 62 in Eingriff steht und zugleich über den Führungsbolzen 65 drehfest mit der Hohlwelle verbunden ist. Durch zwei Anschläge für die Indikatorscheibe 64, die bei dem gezeigten Ausführungsbeispiel einerseits durch die Riemenscheibe 66 und andererseits durch die Kontermuttern 67 gebildet sind, kann die Radialverschiebung der Fräskörper 54 auf den gewünschten Bereich begrenzt werden.

Wie aus den Figuren 4 und 5 zu ersehen ist, sind die Fräskörper 54 an zwei als halbzylindrische Schalen ausgebildeten Tragkörpern 68 angeordnet, die durch axiales Auftrennen eines zylindrischen Rohrs gebildet sind. Die

- 9 -

aus einer Diamant-Stahl-Sintermasse bestehenden Fräskörper 54 sind dabei an den in axialem Abstand voneinander radial über die Tragkörperoberfläche überstehend
angeformten Rippen 69 mit Hilfe eines Hartlots angelötet
oder gegebenenfalls angeschweißt.

Auf der einander zugewandten Seite weisen die Tragkörper 68 eine Axialrille auf, die sich zu einer axialsymmetrischen Durchtrittsöffnung 70 für die Gewindestange 62
ergänzen und in die stirnseitig zwei mit gegensinnig verlaufendem Gewinde mit der Gewindestange 62 in Eingriff
stehende Kegelkörper mit ihrer Spitze eingreifen. Die
Kegelkörper 71 sind mit radial überstehenden Gleitschuhen 72
in einem Langloch 73 der Führungsbüchse 52 drehfest in
axialer Richtung geführt.

Für die radiale Führung der Tragkörper 68 sind insgesamt
vier Führungsstifte 74 vorgesehen, die an der Wandung
der Führungsbüchse 52 befestigt sind und durch entsprechende Bohrungen in den Tragkörpern 68 hindurchgreifen. Außerdem werden die Tragkörper 68 durch mehrere
in axialem Abstand voneinander in entsprechenden Umfangsrillen angeordnete Gummiringe 75 federnd zusammengehalten.

Wird somit die Gewindestange 62 relativ zur Führungsbüchse
52 gedreht, so werden die Kegelkörper 78 je nach Richtung
der Relativdrehung stirnseitig in die Öffnung 70 der Tragkörper 68 hinein oder aus diesen herausgeschoben. Beim
Verschieben in Richtung zu den Tragkörpern 68 werden
diese entgegen der durch die Gummiringe 75 ausgeübten
Federkraft radial in Richtung der Führungsstifte 74 nach
außen verschoben, während sie beim Zurückverschieben der
Kegelkörper 78 von den Gummiringen 75 radial nach innen
gezogen werden.

Die Fräsvorrichtung nach den Figuren 3 bis 5 wird wie
folgt gehandhabt: Zunächst wird die Vorrichtung 2 am Führungsschlitten 57 des Bohrständers 58,59 befestigt, der zuvor bereits zur Führung einer Bohrmaschine beim Einbringen der Bohrung 61 in die Betonwand 60 verwendet worden sein kann. Sodann wird durch Verschieben des Schlittens 57 die Führungsbüchse 52 bis zur gewünschten Tiefe in die Bohrung 61 eingeführt und der Motor 55 in Gang gesetzt, solange die Fräskörper 54 sich noch in ihrer in die Führungsbüchse 52 zurückgezogenen Lage befinden. Die Führungsbüchse 52 ist in ihrem Durchmesser so auf die Bohrung 61 abgestimmt, daß die Bohrungswand als Gleitlager für die Führungsbüchse 52 dient. Zwei weitere Kugellager befinden sich im Lagerblock 51, so daß die gegebenenfalls recht lange Hohlwelle 50 ausreichend gelagert ist.

Anschließend wird die Gewindestange 62 über die Bremsscheibe 63 ein erstes Mal angehalten, so daß - bei richtig gewählter Drehrichtung des Motors - die Fräskörper 54 radial nach außen gegen die Bohrungswand geführt werden. Das Eindringen der Fräskörper 54 in die Bohrungswand ist an einer plötzlichen Mitnahme der Bremsscheibe 63 spürbar. Der Vorgang des Abbremsens der Bremsscheibe 63 wird nun mehrfach wiederholt, so daß sich die Fräskörper 54 allmählich unter Herstellung von Hinterschneidungen in die Bohrungswand einarbeiten können. Gleichzeitig wird die Indikatorscheibe 64 in Richtung zu den Kontermuttern 67 bewegt. Am Anschlagen der Indikatorscheibe 64 gegen die Kontermuttern 67 kann die Bedienungsperson erkennen, wann die vorgeschriebene Tiefe der Hinterschneidungen erreicht ist. Sodann wird die Drehrichtung des Motors 55 umgekehrt und die Bremsscheibe 63 angehalten, bis die Fräskörper 54 in die Führungsbüchse 52 zurückgezogen sind, was an einem Anschlagen der Indikatorscheibe 64 gegen die Riemenscheibe 66 erkennbar ist. Damit ist die Führungsbüchse 52 wieder frei und kann aus der Bohrung 61 herausgezogen werden. Der ganze Vorgang des Einbringens

- 11 -

der sechs Hinterschneidungen dauert nur wenige Minuten
und ist in einem Zug durchführbar.

Durch Verstellen der Kontermuttern 67 auf der Gewindestange 62 kann im übrigen der Verschiebeweg dem allmählichen Verschleiß der Fräskörper 54 angepaßt werden.
Weiter kann die Vorrichtung 2   durch Austauschen der
lösbar mit der Führungsbüchse 52 verbundenen Hohlwelle 50
gegen eine kürzere oder längere Hohlwelle an verschieden
tiefe Bohrungen angepaßt werden.

- 12 -

A n s p r ü c h e

1. Vorrichtung zur Herstellung von Hinterschneidungen in einer zylindrischen Bohrung einer Betonwand mit einer um eine zur Bohrung konzentrische Achse drehbaren Führungsbüchse (13;52) sowie gegenüber der Führungsbüchse radial verschiebbaren Fräsorganen (22, 22',22",22''';54), d a d u r c h  g e k e n n - z e i c h n e t , daß an der Führungsbüchse (52) selbst oder an einer über die Führungsbüchse (13) axial überstehenden Fräswelle (18) mindestens zwei aus einer Diamant-Sintermasse bestehende Fräsorgane (54) oder Frässcheiben (22,22',22",22''') in axialem Abstand voneinander radial überstehend angeordnet und mittels eines Motors (17;55) mit hoher Drehzahl um eine zur Bohrungsachse parallele Achse drehbar sind.

2. Vorrichtung nach Anspruch 1, d a d u r c h  g e - k e n n z e i c h n e t , daß in der Führungsbüchse (13) eine Lagerbüchse (15) und in der Lagerbüchse (15) eine mit dem Motor (17) antreibbare Fräswelle (18) angeordnet ist, die an ihrem freien, in die Bohrung einführbaren Ende die Frässcheiben (22,22',22",22''') trägt, daß die Führungsbüchse (13) an einem Drehlager (12) einer im Bereich der Bohrungsmündung an der Oberfläche der Betonwand festhaltbaren oder befestigbaren Grundplatte (10) drehbar gelagert ist, daß die Lagerbüchse (15) in einer Langlochführung (14) der Führungsbüchse quer zu deren Achse verschiebbar ist, und daß die Fräswelle (18) konzentrisch in der Lagerbüchse (15) gelagert ist.

3. Vorrichtung nach Anspruch 2, d a d u r c h g e k e n n z e i c h n e t , daß das Drehlager (12) der Führungsbüchse (13) auf der der Wandoberfläche zugewandten Seite der Grundplatte (10) angeordnet ist, und daß die Grundplatte (10) eine Durchtrittsöffnung (19) aufweist, durch die die Fräswelle mit ihrem freien, die Frässcheiben (22,22',22".22''') tragenden Ende hindurchgreift.

4. Vorrichtung nach Anspruch 2 oder 3, d a d u r c h g e k e n n z e i c h n e t , daß das Drehlager (12) als Gleitlager ausgebildet ist.

5. Vorrichtung nach einem der Ansprüche 2 bis 4, d a - d u r c h g e k e n n z e i c h n e t , daß die Lagerbüchse (15) in einer Führungsbüchse (13) mittels eines in einem Gewinde der Führungsbüchse (13) geführten, von Hand verdrehbaren Gewindebolzens verschiebbar ist.

6. Vorrichtung nach einem der Ansprüche 2 bis 5, d a - d u r c h g e k e n n z e i c h n e t , daß die Führungsbüchse (13) mittels mindestens eines etwa radial an ihrer Oberfläche überstehenden Handgriffs gegenüber dem Drehlager (12) verdrehbar ist.

7. Vorrichtung nach einem der Ansprüche 2 bis 6, d a - d u r c h g e k e n n z e i c h n e t , daß die Fräswelle (18) mindestens eine zur Frässcheibe (22, 22',22",22''') hin offene Längsbohrung (23) für die Zufuhr von Wasser oder Luft enthält, und daß die Grundplatte (10) radial außerhalb der Durchtrittsöffnung (19) mindestens einen gegen die Wandoberfläche der Betonwand andrückbaren Dichtungsring (29,30) sowie eine von der Außenseite zur Durchtrittsöffnung (19) führende Leitungsdurchführung (28,28') für die

- 14 -

Wasser- oder Luftabsaugung enthält.

8. Vorrichtung nach Anspruch 7, d a d u r c h   g e -
k e n n z e i c h n e t , daß die Lagerbüchse (15)
eine von der Außenseite in einen durch Wellendichtungen
(33) von den Fräswellenlagern (16) getrennten Innenraum
(27) der Lagerbüchse führende Leitung (26) für die
Zufuhr von Wasser oder Luft enthält, .und daß die
Fräswelle (18) mindestens eine den Innenraum (27)
mit der Längsbohrung (23) verbindende Querbohrung (27)
enthält.

9. Vorrichtung nach Anspruch 1, d a d u r c h   g e -
k e n n z e i c h n e t , daß die Führungsbüchse (52)
in die Bohrung (61) der Betonwand (60) einführbar und
mit ihrer zylindrischen Mantelfläche an der Bohrungswand geführt ist und einseitig mit einer Hohlwelle (50)
starr verbunden ist, die an ihrem der Führungsbüchse
(52) gegenüberliegenden Ende in einem Lagerblock (51)
gelagert und durch den Motor (55) wahlweise in einer
der beiden Drehrichtungen antreibbar ist, daß die
Fräskörper (54) an mindestens zwei innerhalb der
Führungsbüchse (52) radial geführten Tragkörpern (68)
radial überstehend angeordnet sind und durch Mantelöffnungen (53) der Führungsbüchse (52) nach außen hindurchgreifen, daß die Tragkörper (68) an ihrer einander
zugewandten Seite Axialrillen aufweisen, die sich zu
einer gemeinsamen Durchtrittsöffnung für eine in der
Führungsbüchse (52) gelagerte Gewindestange (62) ergänzen, daß auf der Gewindestange (62) zwei in der
Führungsbüchse axial geführte und mit dieser drehfest
verbundene Kegel- oder Keilkörper (71) mit gegensinnig
verlaufenden Gewinden angeordnet sind, die mit ihrer
einander zugewandten Spitze von den beiden Stirnseiten
her in die gemeinsame Öffnung (70) der Tragkörper (68)
eingreifen, daß die Tragkörper (68) durch mindestens ein Federelement (75) radial gegeneinander ziehbar oder drückbar sind, und daß die Gewindestange (62) durch die Hohlwelle (50) hindurchgeführt und an ihrem über das Ende der Hohlwelle (50) überstehenden Teil zeitweilig unter Erzeugung einer Relativdrehung gegenüber der Führungsbüchse (52) von Hand oder mechanisch abbremsbar ist.

10. Vorrichtung nach Anspruch 9, d a d u r c h g e - k e n n z e i c h n e t , daß der Lagerblock (51) an einem Führungsschlitten (57) befestigbar ist, der an einer an der Oberfläche der zu bearbeitenden Betonwand (60) befestigbaren Führungsschiene (58) parallel zur Bohrungsachse verschiebbar und an dieser feststellbar ist.

11. Vorrichtung nach Anspruch 10, d a d u r c h g e - k e n n z e i c h n e t , daß der Motor (55) neben dem Lagerblock am Führungsschlitten (57) befestigbar ist und daß die Abtriebswelle des Motors (55) und die Hohlwelle (50) über ein Riemen-, Ketten- oder Zahnradgetriebe (56) miteinander kuppelbar sind.

12. Vorrichtung nach einem der Ansprüche 9 bis 11, d a - d u r c h g e k e n n z e i c h n e t , daß der über das Ende der Hohlwelle (50) überstehende Teil der Gewindestange (62) eine Bremsscheibe (63) trägt.

13. Vorrichtung nach einem der Ansprüche 9 bis 12, d a - d u r c h g e k e n n z e i c h n e t , daß auf dem über die Hohlwelle (50) überstehenden Teil der Gewindestange (62) eine mit deren Gewinde in Eingriff stehende, relativ zur Hohlwelle (50) drehfest axial geführte, die radiale Position der Fräskörper (54) anzeigende Indikatorscheibe (64) zwischen zwei Anschlägen (66,67) begrenzt verschiebbar angeordnet ist.

14. Vorrichtung nach einem der Ansprüche 9 bis 13, d a d u r c h   g e k e n n z e i c h n e t , daß die Tragkörper (68) durch die beiden halbzylindrischen Schalen eines im wesentlichen zylindrischen, axial aufgetrennten Metallrohrs gebildet sind, die durch mehrere, in axialem Abstand voneinander angeordnete Gummiringe (75) federnd zusammengehalten sind.

15. Vorrichtung nach Anspruch 14, d a d u r c h   g e - k e n n z e i c h n e t , daß die Fräskörper (54) an auf einander gegenüberliegenden Seiten der Tragkörper (68) angeformten Rippen (69) angeschweißt oder angelötet sind.

16. Vorrichtung nach einem der Ansprüche 9 bis 15, d a d u r c h   g e k e n n z e i c h n e t , daß die Tragkörper (68) in parallel zur radialen Verschieberichtung verlaufenden Querbohrungen von mehreren, seitlich neben den Mantelöffnungen (53) an der Führungsbüchse (52) befestigten Führungsstiften (74) durchsetzt sind.

17. Vorrichtung nach einem der Ansprüche 9 bis 16, d a d u r c h   g e k e n n z e i c h n e t , daß die Kegel- oder Keilkörper (71) mindestens einen radial überstehenden Gleitschuh (72) aufweisen, der in einem axialen Langloch in der Führungsbüchse (52) geführt ist.

Fig. 1

0056132

1/4

**Fig. 2**

Fig.3

## Fig. 5

72  73  74  75  74  68  73  72

62

72  71  73  54  69  70  68  73  71  72  52

50

## Fig. 4

52

74  74

5
5

72  73  71  74  75  53  54  68  71  73  72

50  62

4/4

0056132

0056132

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 348 002</u> (NANINI)<br>* Seite 3, Zeile 16 bis Seite 5, Zeile 13; Figuren 1,2,3 * | 1,2,3 |
| X | <u>DE - A - 2 022 226</u> (VEB)<br>* Seiten 4-6; Figur 1 * | 1,2,3, 5,6 |
| X | <u>US - A - 2 247 283</u> (YOUNG)<br>* Seite 7, linke Spalte, Zeilen 38 bis 60; Figuren * | 1,9 |
| X | <u>US - A - 1 591 967</u> (EMERSON)<br>* Ganzes Dokument * | 9,14- 17 |
| X | <u>NL - A - 6 705 281</u> (VISSERS)<br>* Figuren 1-6 * | 10,11 |
| A | <u>FR - A - 2 337 019</u> (MACDONALD) | |
| A | <u>US - A - 3 362 268</u> (FRIED) | |
| A | <u>DE - C - 89 733</u> (ZANARDO) | |
| A | <u>DE - C - 242 285</u> (HUNDRIESER) | |

**KLASSIFIKATION DER ANMELDUNG (Int. Cl.³)**

B 28 D 1/18

**RECHERCHIERTE SACHGEBIETE (Int Cl.³)**

B 28 D
B 23 B
B 23 C
B 24 B

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-04-1982 | PEETERS S. |

EPA form 1503.1   06.78